# EUROPÄISCHE PATENTSCHRIFT

(11) **EP 2 349 882 B1**
(45) Veröffentlichungstag und Bekanntmachung des Hinweises auf die Patenterteilung: **08.05.2013**
(21) Anmeldenummer: 09759694.4
(22) Anmeldetag: 02.11.2009
(51) Int. Cl.: B65G 47/52, B65G 47/84

(54) **SYSTEM UND VERFAHREN ZUM ENTLADEN VON TABLAREN**
SYSTEM AND METHOD FOR UNLOADING TRAYS
SYSTÈME ET PROCÉDÉ POUR DÉCHARGER DES TABLETTES

(30) Priorität: 03.11.2008 DE 102008055704
(43) Veröffentlichungstag der Anmeldung: 03.08.2011
(73) Patentinhaber: Dematic GmbH, 63073 Offenbach (DE)
(72) Erfinder: SCHWARDT, Axel, 91126 Schwabach (DE); FRITZSCHE, Roland, 90475 Nürnberg (DE)
(74) Vertreter: Moser & Götze
(86) Internationale Anmeldenummer: PCT/EP2009/064473
(87) Internationale Veröffentlichungsnummer: WO 2010/060745

(56) Entgegenhaltungen:
- DE-A1- 1 963 111
- DE-U1- 9 211 139
- US-A- 2 949 995

## Beschreibung

Die Erfindung betrifft ein System zum Entladen von mit Artikeln beladenen Tablaren mit einem ersten Zulieferförderer, auf dem zu entladende Tablar in Förderrichtung angeliefert werden, die einen Rahmen mit einem umlaufenden erhöhten Rand und einem Boden mit mindestens einer Ausnehmung und eine auf dem Boden des Rahmens aufliegende Transportplatte für die Artikel umfassen, und ein entsprechendes Verfahren.

Solche Systeme und Verfahren dienen zum automatischen Entladen von mit Artikeln beladenen Tablaren, wobei der Entladevorgang im laufenden Förderfluß, eingebunden in zu- und abfördernder Fördertechnik, ausgeführt wird.

Diese beladenen Tablare bestehen aus einem Rahmen mit einem umlaufenden erhöhten Rand und einem Boden mit mindestens einer Ausnehmung und eine auf dem Boden des Rahmens aufliegende stabile Auflage (Transportplatte) für die Artikel umfassen,.

Der Einsatz von Trays oder Tablaren, im Weiteren lediglich als Tablare bezeichnet, ist in automatischen Lager- und Kommissionieranlagen oft anzutreffen. Diese Tablare erlauben es, Artikel, die in ihren Abmessungen und/oder Materialeigenschaften sehr inhomogen sind bzw. die sehr schonend transportiert und gelagert werden müssen, trotz dieser Inhomogenität der Artikel gleichartig und schnell und kontrolliert in Logistikanlagen zu handhaben.

Die auf dem Markt erhältlichen Tablare, haben die unterschiedlichsten Ausprägungen. So sind Tablare mit geschlossenem Boden, mit Böden, die Schlitze oder Löcher haben (zum Aushub der Artikel) oder auch mit eingelegten, aushebbaren Böden in Kombination mit Schlitzen und / oder Löchern im Boden bekannt.

In vielen Fällen werden Tablare manuell be- und entladen. Auch sind Anwendungen bekannt, in denen Tablare automatisch beladen und automatisch entladen werden.

Während die automatische Beladung meist im Fluss durchgeführt wird, muss die automatische Entladung an speziellen Stationen durchgeführt werden, wobei das Tablar an diesen Stationen bei der Entladung gestoppt wird, also still steht. Durch den Stopp geht wertvolle Zeit verloren und in der Regel wird an diesen Stationen zusätzlich eine spezielle Ausstattung (Aushub- und Abschiebevorrichtung) benötigt.

So ist es aus der DE 103 13 576 A1 bekannt, Tablare mit einem umlaufenden Rand und mit Löcher im Boden zu verwenden, so dass die Artikel durch Hubstifte von unten ausgehoben werden können. Die Artikel werden dann mittels eines Rechens verschoben (vgl. Abs. [0013] und [0053]).

Aus der DE 40 23 290 C1 ist es bekannt, Dachziegel zum Engobieren oder Glasieren von ihrer rahmenartigen Unterlage abzuheben und anschließend wiederabzusetzen, wozu ein von unten durch den Tragrahmen greifendes Huborgan vorgesehen ist, das die Dachziegel von dem Tragrahmen bei stetiger Förderung, also in der Bewegung, abhebt und wieder absetzt.

Allerdings ist dieses Verfahren nur bei Synchronität der Bewegungen des Dachziegelförderers und des Rechenförderers möglich, da das Huborgan mit seinen Stiften genau durch die Aussparungen senkrecht von unten in den Tragrahmen eingreifen muss, um den gesamten Dachziegel gleichzeitig anzuheben, so dass die Huborgane über eine Parallelführung verfügen. Auch muss das Huborgan genau an die Formgebung der Dachziegel angepasst sein, um diese zu stützen, so dass das gezeigte System wenig flexibel ist. Zudem ist die Geschwindigkeit klein, da das Huborgan die Dachziegel eine gewisse Zeit anheben muss, so dass diese engobiert bzw. glasiert werden können.

Die dort gezeigte Vorrichtung eignet sich von daher nicht für moderne Logistikanwendungen in denen inhomogene Artikel bei hoher Geschwindigkeit "gleichzeitig" und selektiv verarbeitet werden müssen.

Aus der eigenen, noch nicht veröffentlichten DE 10 2007 044 697 sowie der DE 92 11 139 U1 ist jeweils ein System zum Entladen von mit Artikeln beladenen Tablaren mit einem ersten Zulieferförderer gemäß dem Oberbegriff des Anspruchs 1, auf dem zu entladende Tablare angeliefert werden, die mit einem umlaufenden erhöhten Rand und einem mit Ausnehmungen versehenen Boden versehen sind, und mit von unten durch die Ausnehmungen hindurch greifenden in Förderrichtung beweglich ausgestalteten Huborganen einer Aushubvorrichtung bekannt, und ein entsprechendes Verfahren gemäß dem Oberbegriff des Anspruchs 13. Hierbei ist auf dem Boden der Tablare ggf. eine darauf aufliegende flache Transportplatte für die Artikel vorgesehen, die von den Huborganen angehoben wird, so dass die auf der Transportplatte liegenden Artikel abgestreift werden können.

Dieses System eignet sich bereits sehr gut für die Entladung von Tablaren. Allerdings hat sich gezeigt, dass es gerade bei empfindlichen Artikeln ungünstig ist, wenn diese beim Entladen eine vertikale Hubbewegung durchlaufen müssen. Auch kann es schwierig sein, schwere Artikel mit Hilfe der Huborgane, die als Erhebungen auf den Riemen eines Riemchenförderers ausgebildet sind, anzuheben.

Demgegenüber besteht die Aufgabe der vorliegenden Erfindung ein Verfahren und System für den Einsatz in einer modernen Logistikanlage zu schaffen, die eine Entladung der Tablare ohne Stillstand bzw. Stopp bei hoher Geschwindigkeit erlaubt und dabei flexibel ist für unterschiedliche Artikel und zudem einfach aufgebaut ist, ohne dass die Artikel auf den Tablaren zum Entladen eine vertikale Bewegung durchlaufen müssen, und die zudem auch für schwere Artikel geeignet ist.

Diese Aufgabe wird durch das in Anspruch 1 wiedergegebene System sowie durch das in Anspruch 13 wiedergegebene Verfahren gelöst.

Dadurch, dass eine Absenkvorrichtung vorgesehen ist, die lediglich den konstruktiv leichten Rahmen eines Tablars bewegt, ohne eine vertikale Bewegung der innen liegenden, beladenen Transportplatte zu bewirken, ist es möglich, die auf der vom Rahmen separaten Transportplatte liegenden Artikel auf gleichbleibendem Niveau durch das System zu bewegen. Dies erlaubt eine hohe Bearbeitungsgeschwindigkeit bei geringer Geräuschentwicklung. Ferner können nun auch schwere Artikel transportiert und zuverlässig entladen werden, da diese nicht in der Vertikalen bewegt werden müssen Lediglich der den Artikel sichernde Rahmen des Tablars wird bedarfsgerecht abgesenkt.

Bei der erfindungsgemäßen Entladung erfolgen mehrere Bewegungen überlagert: Tablartransport, Abstützung der Transportplatte, Absenken des Rahmens, Abstreifen des jeweiligen Artikels und Anheben des Rahmens. Durch diese Überlagerung wird wiederum Zeit und Raum eingespart, was ebenfalls zu den besseren Durchsatzleistungen bei der Tablarentladung beiträgt.

Die beschriebene Vorrichtung ist aus Kostensicht deutlich günstiger als die bekannten Entladestationen, da keine Stoppposition vorgesehen ist, die überwacht werden müsste und mit zusätzlicher Geräuschentwicklung verbunden ist. Auch ist weder eine separate, getrennte Aushubvorrichtung noch ein beweglicher "Abschieber" (z.B. Pusher oder ähnliches) notwendig, was den Aufbau vereinfacht.

Die beschriebene Vorrichtung benötigt somit einen deutlich geringeren Aufwand an Sensorik als die bekannten Entladestationen, da diese keine exakte Synchronität erfordert.

Bevorzugterweise umfasst die Absenkvorrichtung von unten durch die Ausnehmung hindurch greifende in Förderrichtung bewegliche Stützelemente. Diese gewährleisten zusammen mit dem Absenken des Rahmens ein gleichbleibendes Niveau der Transportplatte.

Um auf einfache Weise die Absenkung des Rahmens des Tablars durchzuführen, ist es bevorzugt, wenn die Absenkvorrichtung einen zweiten an den ersten Zulieferförderer angrenzenden Förderer umfasst, dessen Niveau gegenüber dem Zulieferförderer abgesenkt ist.

Sinnvollerweise sind die Stützelemente dann auf dem beweglichen Förderteil des Förderers angeordnet.

Dabei weisen die Stützelemente vorzugsweise eine Höhe auf, die derart bemessen ist, dass die Auflagenoberfläche der Transportplatte mindestens die Höhe des abgesenkten umlaufenden Rands des Rahmens des Tablars überragt und der Niveauunterschied zum Zulieferförderer ausgeglichen wird. Somit werden die Artikel auf der Transportplatte von der schützenden Umrandung durch den Rahmen frei und können abgestreift werden.

Um den Rahmen des Tablars aktiv abzusenken, kann die Absenkvorrichtung eine erste Greifeinheit aufweisen. Die erste Greifeinheit kann an den Rahmen angreifende und diesen nach unten ziehende Formblöcke aufweisen, die auf einem schräg nach unten verlaufenden Förderer angeordnet sind. Die sich in Förderrichtung bewegenden Formblöcke ergreifen also den Rahmen und "ziehen" diesen parallel nach unten, um die Transportplatte freizugeben. Gleichzeitig stützt der schräge Förderer das Tablar beim Übergang von dem Zulieferförderer zum Förderer. Dies ermöglicht eine parallele Relativbewegung zwischen Tablarrahmen und Transportplatte und verhindert ein durch Verdrehen mögliches Verkanten der Transportplatte im Rahmen.

In entsprechender Weise ist eine zweite Greifeinheit vorsehbar, die zum Wiederanheben des Rahmens nach dem Entladen analog bzw. umgekehrt ausgestaltet ist.

Alternativ können zum Absenken und auch Anheben des Rahmens an diesen angreifende und diesen nach unten drückende Führungen nach Art von kulissenartigen Zwangsführungen verwendet werden. Die Führungen können dazu seitlich und in Förderrichtung des Tablars schräg nach unten bzw. nach oben verlaufend angeordnet sein, um lediglich mit dem Rahmen in Kontakt zu treten.

Erfindungsgemäß kann die Absenkvorrichtung einen fest angeordneten Abstreifer aufweisen (s.o.). Dieser ist zur Förderrichtung des Förderers schräg, insbesondere im spitzen Winkel, vorzugsweise im Bereich zwischen 15 und 45 Grad, angeordnet und sollte eine Erstreckung aufweisen, die sich über die Auflagenfläche des Tablars erstreckt. Der Abstreifer sollte sinnvollerweise nur derart oberhalb des Förderers angeordnet ist, dass die auf der erhobenen Transportplatte aufliegenden Artikel abgestreift werden können.

Alternativ kann ein Pusher zum Einsatz kommen. Dieser sollte dann ebenfalls eine etwa 45 Grad betragende Bewegungsrichtung besitzen. Hier ist vorteilhaft, dass dieser sich hinsichtlich der Aufschlagsgeschwindigkeit und entsprechenden Kraft steuern lässt, was eine besonders schonende Artikelhandhabung zulässt und auch die Ausrichtung des Artikels nicht verändert. Als weitere sinnvolle Alternative kommen sogenannte "Vertibelts®" in Betracht. Hierbei handelt es sich um fest angeordnete Abstreifer, die ein horizontal umlaufendes vertikal ausgerichtetes Förderband aufweisen, so dass die Artikel "aktiv" mitgenommen und abgestreift werden. Dies ist gerade bei kleinen Artikeln zuverlässiger als bei ein reiner Abstreifer an sich.

Somit können die Artikel ggf. ohne weitere bewegliche Einrichtungen durch Ablenken von der Transportplatte beim (Weiter)fördern des Tablars einfach abgestreift werden. Dies erfolgt vorzugsweise in etwa in derselben Ebene.

In einer anderen ebenfalls bevorzugten Ausführungsform ist daher parallel zum Förderer auf Höhe des Abstreifers ein Weitertransportförderer für die abgezogenen Artikel vorgesehen ist, dessen Geschwindigkeit vorzugsweise der Fördergeschwindigkeit des Förderers angepasst ist.

Vorzugsweise ist der Förderer ein Riemenförderer und weist eine Spurbreite auf, die eine Anordnung der Stützelemente als Erhebungen auf den Riemen erlaubt. Dabei können die Stützelemente als längliche Erhebungen auf dem Förderer, insbesondere als erhöhter die Riemen überbrückender Teil, ausgebildet sein, deren Abmessungen - zumindest im oberen Einfädelbereich - geringfügig kleiner sind als diejenige der Ausnehmung.

Wenn die Stützelemente als (längliche) Erhebungen auf dem Förderer ausgebildet sind, deren Abmessungen geringfügig kleiner ist als diejenigen der Ausnehmung, kann beim Übergang von dem Zulieferförderer mit kraftschlüssiger Förderung eine formschlüssige Förderung durchgeführt werden, was erlaubt, bei hoher Geschwindigkeit Artikel abzustreifen, ohne dass das Tablar verrutscht. Hierzu werden diese Stützelemente hilfsweise angeschrägt, so dass beim Eintauchen in die Tablaröffnung (Ausnehmung) genügend Spiel vorhanden ist, nach dem Absenken aber eine gute Passung zwischen Tablar und Stützelementen besteht. Der somit formschlüssige Tablartransport während des Abstreifens der Artikel garantiert ein breites Einsatzspektrum der Erfindung unabhängig vom Gewicht der Artikel, von Reibwerten zwischen Artikel und Auflage usw.

In einer besonders bevorzugten Ausführungsform ist die als Auflage dienende Transportplatte über Stifte oder Führungen mit dem Rahmen des Tablars beweglich verbunden und geführt. Somit dient der separate Rahmen als Abstützrahmen eines Grundkörpers des Tablars und die Auflage als eigentlicher Transportträger. Über die Stifte oder Führungen ist die Transportplatte so mit dem Rahmen "verzahnt", dass diese nicht ohne erhebliche Verformung von dem Rahmen und Platte trennbar ist, aber andererseits ihre vertikale Lage parallel zum Boden des Rahmens ändern kann.

Zum Abtransport der entleerten Tablare kann in Verlängerung des Förderers und des Zulieferförderers ein die leeren Tablare abtransportierender Abtransportförderer vorgesehen sein.

Weitere Einzelheiten und Vorteile der Erfindung ergeben sich aus der nachfolgenden Beschreibung von Ausführungsbeispielen anhand der Zeichnung, in der
Fig. 1 eine schematische Draufsicht von oben auf ein System der Erfindung ist, wobei die als Auflage dienenden Transportplatten zur besseren Übersicht transparent gezeichnet sind;
Fig. 2 eine schematische Seitenansicht auf einen Schnitt I-I durch das System aus Fig. 1 ist;
Fig. 3 eine schematische Draufsicht von oben auf eine im Rahmen der Erfindung verwendete Auflage ist;
Fig. 4 eine schematische perspektivische Ansicht auf die Auflage aus Fig. 3 ist;
Fig. 5 eine schematische Draufsicht von oben auf einen Rahm eines im Rahmen der Erfindung verwendeten Tablars ohne Transportplatte ist;
Fig. 6 eine schematische perspektivische Ansicht auf den Rahmen aus Fig. 5 ist.
Fig. 7 eine schematische Draufsicht von oben auf eine zweite Ausführungsform des Systems der Erfindung ist, wobei die Transportplatten zur besseren Übersicht transparent gezeichnet sind, und
Fig. 8 eine schematische Seitenansicht auf einen Schnitt II-II durch das System aus Fig. 7 ist;

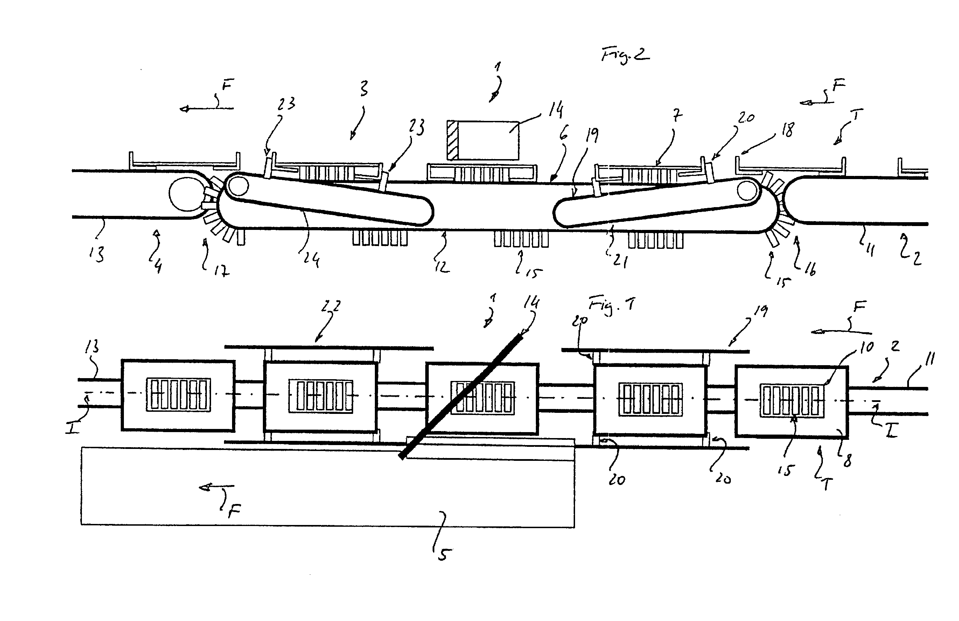

In den Figuren 1 und 2 ist ein erstes System als Ganzes mit 1 bezeichnet, das zum Entladen von mit Artikeln A beladene Tablare T dient.

Es umfasst einen Zulieferförderer 2, auf dem zu entladende Tablare T angeliefert werden, die einen Rahmen 18, der mit einem umlaufenden erhöhten Rand 9 und einer in Längsrichtung verlaufenden zentralen Ausnehmung 10 versehenen Boden 8 sowie einer auf dem Boden 8 versehen ist, und eine auf dem Boden 8 aufliegende vergleichsweise dünne flache Transportplatte 7 für die Artikel umfassen.

Das System umfasst weiter eine an den Zulieferförderer 2 sich anschließende Absenkvorrichtung 3 mit einem Förderer 6 und einen sich daran anschließenden Abtransportförderer 4 für die entleerten Tablare T.

Auf Höhe der Absenkvorrichtung 3 bzw. deren Förderers 6 beginnt und läuft von da an dazu parallel ein Weitertransportförderer 5 für die abgestreiften Artikel A, dessen Geschwindigkeit der Fördergeschwindigkeit des Förderers 6 angepasst ist.

Der Zulieferförderer 2 ist ein Riemchenförderer, auf dessen beabstandeten Riemen 11 die beladenen Tablare T aufliegen.

Der Förderer 6 ist ebenfalls ein Riemchenförderer, auf dessen beabstandeten Riemen 12 die Tablare T beim Entladen aufliegen, deren Abstand bzw. Spurbreite jedoch geringer ist, so dass der Aushubförderer 6 mit dem Zulieferförderer 2 verzahnt werden kann, um eine Übergabe z. B. an der Übergabestelle 16 zu erreichen.

Der Abtransportförderer 4 ist ebenfalls ein Riemchenförderer, auf dessen beabstandeten Riemen 13 die entleerten Tablare T aufliegen, deren Abstand bzw. Spurbreite jedoch größer ist als derjenige des Förderers 6 und etwa gleich demjenigen des Zulieferförderers 2 ist, so dass der Förderer 6 mit dem Abtransportförderer 4 verzahnt werden kann, um eine Übergabe z. B. an der Übergabestelle 17 zu erreichen.

Das Niveau des Förderers 6 ist gegenüber dem Zulieferförderer 2 abgesenkt, so dass die Oberkante der Tablarrahmen 18 beim Ablegen auf dem Förderer 6 das Abschieben der Artikel A nicht behindert.

Die Absenkvorrichtung 3 umfasst neben dem Förderer 6 weiter von unten durch die Ausnehmungen 10 hindurch greifende in Förderrichtung beweglich ausgestaltete Stützelemente 15, die dazu dienen, die auf dem Boden 8 der Tablare aufliegende flache Transportplatte 7 für die Artikel beim Absenken des Rahmens 18 zu stützen bzw. deren Niveau beizubehalten.

Dazu sind die Stützelemente 15 auf dem beweglichen Förderteil 12 des Förderers 6 angeordnet bzw. als segmentartig aufgebaute erhöhte und blockartig gruppierte Mitnehmer 15 ausgebildet, so dass diese in den Umlenkbereichen umfahren können und gleichzeitig beim Eingriff in die Ausnehmung 10 von unten die Transportplatte 7 stützen können.

Die Stützelemente 15 sind also als längliche Erhebungen auf dem Förderer 6 als erhöhter überbrückender Teil der Riemen 12 ausgebildet, deren Abmessungen geringfügig kleiner ist als diejenigen der Ausnehmungen 10.

Die Stützelemente 15 weisen dabei eine Höhe auf, die derart bemessen ist, dass die Oberseitenoberfläche der Transportplatten 7 mindestens die Höhe des umlaufenden Rands 9 des Tablars T geringfügig nach dem Absenken des Rahmens 18 überragt.

Somit kann ein ebenfalls zur Absenkvorrichtung 3 gehörender fest angeordneter Abstreifer 14, der Bereich des Förderers 6 angeordnet ist, die auf den Transportplatten 7 aufliegenden Artikel A nach deren Freigabe durch Absenken des Rahmens 18 abstreifen.

Der Abstreifer 14 ist dabei zur Förderrichtung (Pfeil in Figur 1 und 2) des Förderers 6 schräg im spitzen Winkel und dabei derart oberhalb des Förderers angeordnet, dass die auf der Transportplatte 7 jeweils aufliegenden Artikel A abgestreift werden und auf dem parallel laufenden Weitertransportförderer 5 landen.

Dazu weist der Abstreifer eine Erstreckung auf, die sich über die Transportplatte 7 der Tablare T erstreckt, so dass die Artikel A unabhängig von ihrer Lage auf dem Tablar T bzw. der Transportplatte 7 erreicht werden.

Der Transport der Tablare T auf dem Förderer 2 erfolgt auf Grund eines Kraftschlusses. An der Übergabestelle 16 erfolgt der Übergang des Tablars T vom Zulieferförderer 2 auf den Förderer 6 der Absenkvorrichtung 3.

An der Stelle 16 kämmen die Stützelemente 15 eines Blocks in die Ausnehmung 10 des Tablars T ein. Ab diesem Zeitpunkt wird das Tablar T nun mittels Formschluss zwischen Tablar T und den Stützelemente 15 transportiert.

Gleichzeitig wird der Rahmen 18 des Tablars T von einer ersten Greifeinheit 19 ergriffen und abgesenkt. Dazu weist die Greifeinheit 19 an den Rahmen 18 angreifende und diesen nach unten ziehende Formblöcke 20 auf, die auf einem schräg nach unten in Förderrichtung der Tablare T verlaufenden Förderer 21 gegenüberliegend angeordnet sind, also den Rahmen 18 zwischen sich einklemmend ergreifen.

Aufgrund des schrägen Verlaufs des Förderers 21 wird der so gehaltene Rahmen 18 abgesenkt, währende die auf den Stützelementen 15 ruhende Transportplatte 7 ihr Niveau beibehält.

Die Höhe der Stützelemente 15 ist dabei so zusammen mit der Anordnung der Förderer 6 und 2 gewählt (vgl. oben), dass die Transportplatte 7 bei vollständigem Eingriff der Stützelemente 15 in die Ausnehmung 10 ihr Niveau so hält, dass die Oberkante der Transportplatte 7 sich etwas oberhalb der Oberkante des Rands 9 des Tablars befindet.

Das Tablar T, bei dem der Rahmen 18 vollständig abgesenkt ist, passiert jetzt den fest angeordneten Abstreifer 14.

Der oder die Artikel A auf der Transportplatte 7 werden daher durch den Abstreifer 14 vom Tablar T auf den parallelen Weitertransportförderer 5 abgeschoben und das Tablar T passiert den Abstreifer.

Damit das Abstreifen realisiert werden kann, ist der Formschluss zwischen Tablar T und Förderer 6 notwendig.

Nachdem der Artikel A vom Tablar T abgeschoben wurde, kommt das Tablar T zur Übergabestelle 17.

Dort findet in einer zweiten Greifeinheit 22 der umgekehrte Vorgang zum Absenken des Rahmens statt, d.h. der Rahmen 18 wird durch entsprechende an den Rahmen 18 angreifende und diesen nach unten ziehende Formblöcke 23 auf, die auf einem schräg nach oben in Förderrichtung der Tablare T verlaufenden Förderer 24 gegenüberliegend angeordnet sind, also den Rahmen 18 zwischen sich einklemmend ergreifen. Aufgrund des schrägen Verlaufs des Förderers 24 wird der so gehaltene Rahmen 18 angehoben.

An dieser Stelle 17 ist der Übergang von Förderer 6 auf den Abtransportförderer 5. Beide Förderer haben wiederum eine unterschiedliche Spurbreite, analog der Übergabestelle 16

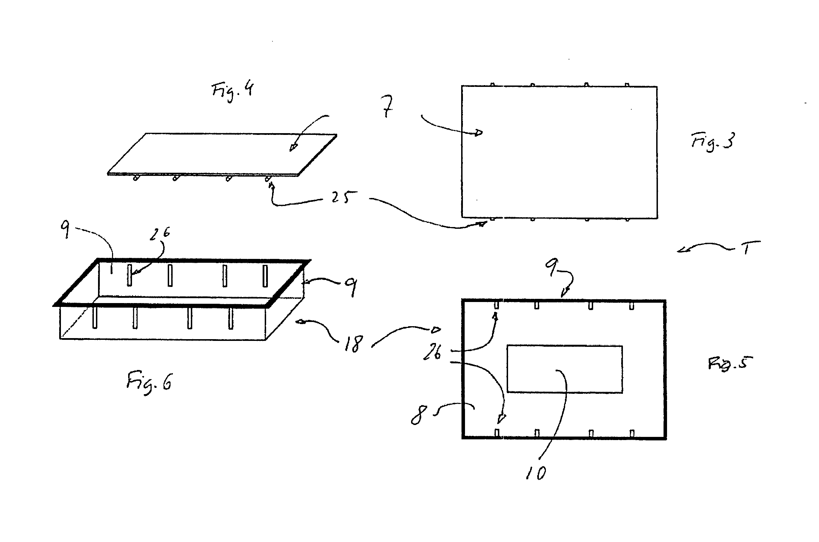

Die Transportplatten 7 der Tablare T sind auf ihrer Unterseite mit seitlich herausstehenden Stiften 25 versehen (vgl. Figuren 3 und 4), die in entsprechend in den Innenseiten des Rands 9 des Rahmens 18 vorgesehenen Führungen 26 eingreifen, so dass die Transportplatte 7 mit dem Rahmen 18 "verzahnt" ist, so dass die Transportplatte 7 nicht ohne erhebliche Verformung von dem Rahmen 18 trennbar ist, aber andererseits ihre vertikale Lage parallel zum Boden 8 des Rahmens 18 ändern kann. Somit kann die Transportplatte 7 z. B. beim Abstreifen nicht in der Horizontalen verrutschen.

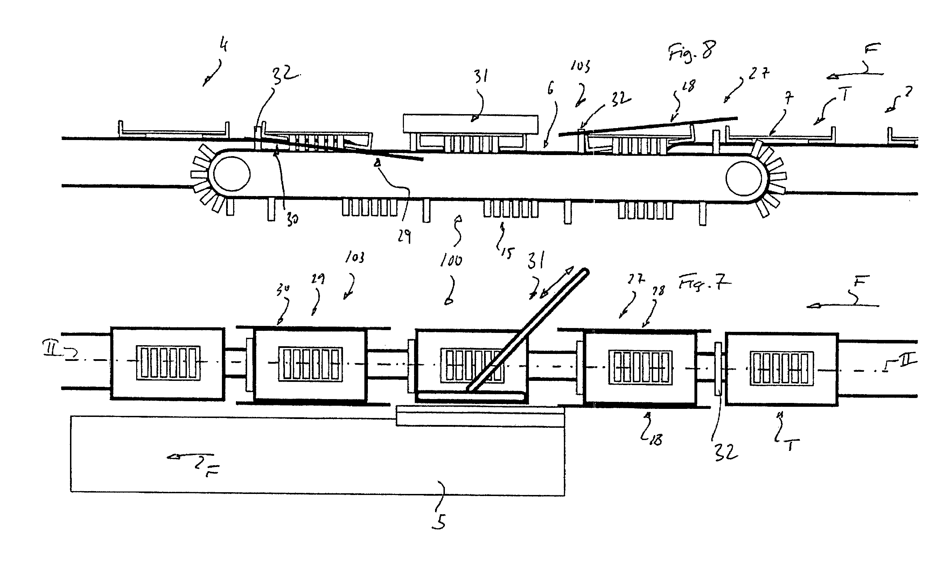

In den Figuren 7 und 8 ist ein zweites als Ganzes mit 100 bezeichnetes System gezeigt, das ebenfalls zum Entladen von mit Artikeln A beladene Tablare T dient. Es entspricht im Wesentlichen dem zuvor beschriebenen System 1 mit dem Unterschied, dass die Absenkvorrichtung, hier mit 103 bezeichnet, andersartig ausgestaltet ist. Es werden daher für sich entsprechende Teile dieselben Bezugszeichen der ersten Ausführungsform verwendet und lediglich auf die Unterschiede nachfolgend eingegangen.

Die Absenkvorrichtung 103 weist eine erste Greifeinheit 27 auf, die an den Rahmen 18 angreifende und diesen nach unten drückende Führungen 28 aufweist. Die Führungen 28 sind seitlich und in Förderrichtung F des Tablars T schräg nach unten verlaufend angeordnet, um lediglich mit dem Rahmen 18 in Kontakt zu treten.

Die Absenkvorrichtung 103 weist ferner eine zweite Greifeinheit 29 auf, die ebenfalls an den Rahmen 18 angreifende und diesen nach unten drückende Führungen 30 aufweist. Die Führungen 30 sind seitlich und in Förderrichtung F des Tablars T allerdings schräg nach oben verlaufend angeordnet, um lediglich mit dem Rahmen 18 in Kontakt zu treten.

Somit wird der Rahmen 18 von den seitlichen Führungen 28 bzw. 30 abgesenkt bzw. angehoben. Die Führungen 28 bzw. 30 sind jeweils nach Art einer Zwangsführung oder Kulisse ausgestaltet, die den Rahmen 18 des angelieferten Tablars T seitlich aufnimmt und durch ihren schrägen Verlauf nach unten bzw. nach oben führt bzw. drückt. Dabei gleitet der Rahmen 18 im Kontakt mit den Führungen 28 bzw. 30.

Während dieser Zeit wird die Transportplatte 7, wie zuvor, von den Stützelementen 15 getragen, so dass sie im System 100 ihr Niveau stets beibehält.

Als weiterer Unterschied wird anstatt des einfachen Abstreifers 14 nun ein aktiv bewegter Pusher 31 eingesetzt, der im 45 Grad Winkel in Förderrichtung F vor- und zurückfahrbar (vgl. Doppelpfeil) ist, um die Artikel A abzustreifen bzw. abzuschieben. Er ist zusätzlich hinsichtlich Aufschlagsgeschwindigkeit und Kraft steuerbar, was eine besonders schonende Artikelhandhabung zulässt und auch die Ausrichtung des jeweiligen Artikels A nicht verändert.

Weiter umfasst der Förderer 6 Anschlagselemente 32, die den Gruppen von Stützelementen 15 vorausgehen, um die Position der Tablar T auszurichten. Dies ist insbesondere bei schweren Beladungen vorteilhaft, wo die Positionierung allein über die Stützelemente 15 in der Ausnehmung 10 fehlschlagen kann.

Das Tablar 10 kommt also vom Zulieferförderer 2 und trifft im Übergabebereich 16 auf ein entsprechendes Anschlagselement 32, so dass die Ausnehmung 10 des jeweiligen Tablars T bzw. dessen Rahmens 18 mit der nächsten Gruppe der Stützelemente 15 ausgerichtet ist.

### Bezugszeichenliste

| | |
|---|---|
| 1, 100 | System |
| 2 | Zulieferförderer |
| 3 | Absenkvorrichtung |
| 4 | Abtransportförderer |
| 5 | Weitertransportförderer |
| 6 | Förderer |
| 7 | Transportplatte |
| 8 | Boden |
| 9 | Rand |
| 10 | Schlitz |
| 11 | Förderriemen von 2 |
| 12 | Förderriemen von 6 |
| 13 | Förderriemen von 4 |
| 14 | Abstreifer |
| 15 | Stützelement |
| 16 | Übergang von 2 auf 6 |
| 17 | Übergang von 6 auf 4 |
| 18 | Rahmen |
| 19 | Greifeinheit |
| 20 | Formblock |
| 21 | Förderer |
| 22 | Greifeinheit |
| 23 | Formblock |
| 24 | Förderer |
| 25 | Stift |
| 26 | Führung |
| 27 | Greifeinheit |
| 28 | Führung |
| 29 | Greifeinheit |
| 30 | Führung |
| 31 | Pusher |
| 32 | Anschlagselement |
| A | Artikel |
| F | Förderrichtung |
| T | Tablar |

## Patentansprüche

1. System (1, 100) zum Entladen von mit Artikeln (A) beladenen Tablaren (T) mit einem ersten Zulieferförderer (2), auf dem zu entladende Tablare (T) in Förderrichtung (F) angeliefert werden, die einen Rahmen (18) mit einem umlaufenden erhöhten Rand (9) und einem Boden (8) mit mindestens einer Ausnehmung (10) und eine auf dem Boden (8) des Rahmens (18) aufliegende Transportplatte (7) für die Artikel (A) umfassen, **dadurch gekennzeichnet, dass** eine Absenkvorrichtung (3, 103) vorgesehen ist, die lediglich zum Absenken des Rahmens (18) eines Tablars (T) ohne vertikale Bewegung der Transportplatte (7) ausgestaltet ist.

2. System nach Anspruch 1, **dadurch gekennzeichnet, dass** die Absenkvorrichtung (3, 103) von unten durch die Ausnehmung (10) hindurch greifende in Förderrichtung (F) bewegliche Stützelemente (15) umfasst.

3. System nach Anspruch 1 oder 2, **dadurch gekennzeichnet, dass** die Absenkvorrichtung (3, 103) einen zweiten an den ersten Zulieferförderer (2) angrenzenden Förderer (6) umfasst, dessen Niveau gegenüber dem Zulieferförderer (2) abgesenkt ist.

4. System nach Anspruch 2 oder 3, **dadurch gekennzeichnet, dass** die Stützelemente (15) auf dem beweglichen Förderteil (12) des Förderers (6) angeordnet sind.

5. System nach einem der Ansprüche 2 bis 4, **dadurch gekennzeichnet, dass** die Stützelemente (15) eine Höhe aufweisen, die derart bemessen ist, dass die Auflagenoberfläche der Transportplatte mindestens die Höhe des abgesenkten umlaufenden Rands (9) des Rahmens (18) des Tablars (T) überragt und der Niveauunterschied zum Zulieferförderer (2) ausgeglichen wird.

6. System nach einem der Ansprüche 2 bis 5, **dadurch gekennzeichnet, dass** die Stützelemente (15) eine Höhe aufweisen, die derart bemessen ist, dass die Auflagenoberseitenoberfläche der Transportplatte in dem gesamten System auf gleichbleibendem Niveau ist.

7. System nach einem der vorhergehenden Ansprüche, **dadurch gekennzeichnet, dass** die Absenkvorrichtung (3, 103) einen fest angeordneten Abstreifer (14), beweglichen Pusher (31) oder einen Abstreifer, der ein horizontal umlaufendes vertikal ausgerichtetes Förderband aufweist.

8. System nach Anspruch 7, **dadurch gekennzeichnet, dass** der Abstreifer (14) oder Pusher (31) derart oberhalb des Förderers (6) angeordnet ist, dass die auf der Auflage (7) aufliegenden Artikel (A) bei abgesenktem Rahmen (18) vom Tablar (T) abgestreift werden.

9. System nach einem der vorhergehenden Ansprüche, **dadurch gekennzeichnet, dass** die Absenkvorrichtung (3) eine erste Greifeinheit (19) aufweist, die ausgebildet ist, um den Rahmen (18) des Tablars (T) aktiv abzusenken.

10. System nach Anspruch 9, **dadurch gekennzeichnet, dass** die Absenkvorrichtung (3) eine zweite Greifeinheit (22) aufweist, die ausgebildet ist, um den abgesenkten Rahmen (18) des Tablars (T) wieder aktiv anzuheben.

11. System nach einem der vorhergehenden Ansprüche 1 bis 8, **dadurch gekennzeichnet, dass** die Absenkvorrichtung (103) eine erste Greifeinheit (27) aufweist, die an den Rahmen (18) angreifende und diesen nach unten drückende Führungen (28) aufweist.

12. System nach einem der vorhergehenden Ansprüche, **dadurch gekennzeichnet, dass** die Transportplatte (7) und der Rahmen (18) miteinander vertikal beweglich verbunden und geführt sind.

13. Verfahren zum Entladen von mit Artikeln (A) beladenen Tablaren (T) mit einem ersten Zulieferförderer (2), auf dem zu entladende Tablare (T) in Förderrichtung (F) angeliefert werden, die einen Rahmen (18) mit einem umlaufenden erhöhten Rand (9) und einem Boden (8) mit mindestens einer Ausnehmung (10) und eine auf dem Boden (8) des Rahmens (18) aufliegende flache Transportplatte (7) für die Artikel (A) umfassen, **dadurch gekennzeichnet, dass** nur der Rahmen (18) der Tablare (T) in einer Absenkvorrichtung (3, 103) abgesenkt wird, wobei die Transportplatte (7) stets auf gleichbleibendem Niveau verbleibt.

14. Verfahren nach Anspruch 13, **dadurch gekennzeichnet, dass** Transportplatte (7) von in Förderrichtung beweglichen Stützelementen (15) von unten durch die Ausnehmung (10) hindurch im Bereich der Absenkvorrichtung (3, 103) zum Beibehaltung ihres Niveaus gestützt wird.

## Claims

1. System (1, 100) for unloading trays (T) loaded with articles (A), having a first, infeed, conveyor (2) on which trays (T) to be unloaded are supplied in a direction of conveyance (F), which trays (T) comprise a frame (18) having a surrounding raised rim (9) and having a floor (8) containing at least one opening (10) and comprise a transporting plate (7) for the articles (A) which rests on the floor (8) of the frame (18), **characterised in that** a lowering arrangement (3, 103) is provided which is designed merely to lower the frame (18) of a tray (T) without the transporting plate (7) being moved vertically.

2. System according to claim 1, **characterised in that** the lowering arrangement (3, 103) comprises supporting members (15) able to move in the direction of conveyance (F) which fit through the opening (10) from below.

3. System according to claim 1 or 2, **characterised in that** the lowering arrangement (3, 103) comprises a second conveyor (6), adjoining the first, infeed, conveyor (2), whose level is lower than that of the infeed conveyor (2).

4. System according to claim 2 or 3, **characterised in that** the supporting members (15) are arranged on the movable conveying part (12) of the conveyor (6).

5. System according to one of claims 2 to 4, **characterised in that** the height of the supporting members (15) is such that the surface of the transporting plate which provides support projects at least above the height when lowered of the surrounding rim (9) of the frame (18) of the tray (T) and the difference in level from the infeed conveyor (2) is compensated for.

6. System according to one of claims 2 to 5, **characterised in that** the height of the supporting members (15) is such that the surface of the transporting plate which provides support is at the same level throughout the system.

7. System according to one of the preceding claims, **characterised in that** the lowering arrangement (3, 103) has a wiper (14) arranged in a fixed position, a movable pusher (31) or a wiper which has a vertically aligned conveyer belt which travels round horizontally.

8. System according to claim 7, **characterised in that** the wiper (14) or pusher (31) is arranged above the conveyor (6) in such a way that, when the frame (18) is lowered, the articles (A) resting on the support means (7) are wiped off the tray (T).

9. System according to one of the preceding claims, **characterised in that** the lowering arrangement (3) has a first gripping unit (19) which is designed to actively lower the frame (18) of the tray (T).

10. System according to claim 9, **characterised in that** the lowering arrangement (3) has a second gripping unit (22) which is designed to actively raise the lowered frame (18) of the tray (T) again.

11. System according to one of preceding claims 1 to 8, **characterised in that** the lowering arrangement (103) has a first gripping unit (27) which has guides (28) which engage with the frame (18) and press it downwards.

12. System according to one of the preceding claims, **characterised in that** the transporting plate (7) and the frame (18) are connected together and guided to be movable vertically.

13. Method of unloading trays (T) loaded with articles (A), using a first, infeed, conveyor (2) on which trays (T) to be unloaded are supplied in a direction of conveyance (F), which trays (T) comprise a frame (18) having a surrounding raised rim (9) and having a floor (8) containing at least one opening (10) and comprise a flat transporting plate (7) for the articles (A) which rests on the floor (8) of the frame (18), **characterised in that**, in a lowering arrangement (3, 103), only the frames (18) of the trays (T) are lowered, the transporting plates (7) always remaining at the same level.

14. Method according to claim 13, **characterised in that**, in the region of the lowering arrangement (3, 103), the transporting plate (7) is supported from below through the opening (10) by supporting members (15) able to move in the direction of conveyance, to enable it to maintain its level.

## Revendications

1. Système (1, 100) pour vider des tablettes (T) chargées d'articles (A), ledit système comportant un premier transporteur d'acheminement (2) sur lequel des tablettes à vider (T) sont acheminées dans la direction de transport (F), lesquelles tablettes comportent un cadre (18) doté d'un bord élevé périphérique (9) et d'un fond (8) possédant au moins un évidement (10) et une plaque de transport (7) posée sur le fond (8) du cadre (18) et destinée aux articles (A), **caractérisé en ce qu'**il est prévu un dispositif d'abaissement (3, 103) qui est conformé uniquement pour abaisser le cadre (18) d'une tablette (T) sans déplacer la plaque de transport (7) verticalement.

2. Système selon la revendication 1, **caractérisé en ce que** le dispositif d'abaissement (3, 103) comporte des éléments de support (15) mobile dans la direction de transport (F) et s'engageant depuis le bas à travers l'évidement (10).

3. Système selon la revendication 1 ou 2, **caractérisé en ce que** le dispositif d'abaissement (3, 103) comporte un second transporteur (6) qui est adjacent au premier transporteur d'acheminement (2) et dont le niveau est abaissé par rapport au transport d'abaissement (2).

4. Système selon la revendication 2 ou 3, **caractérisé en ce que** les éléments de support (15) sont disposés sur la partie de transport mobile (12) du transporteur (6).

5. Système selon l'une des revendications 2 à 4, **caractérisé en ce que** les éléments de support (15) ont une hauteur qui est dimensionnée de telle sorte que la surface de support de la plaque de transport fait saillie au moins de la hauteur du bord périphérique (9) abaissé du cadre (18) de la tablette (T) et la différence de niveau par rapport au transporteur d'acheminement (2) est compensée.

6. Système selon l'une des revendications 2 à 5, **caractérisé en ce que** les éléments de support (15) ont une hauteur qui est dimensionnée de telle sorte que la surface de support supérieure de la plaque de transport dans tout le système est à niveau constant.

7. Système selon l'une des revendications précédentes, **caractérisé en ce que** le dispositif d'abaissement (3, 103) comporte un dispositif d'enlèvement (14) disposé de façon fixe, un dispositif de poussée mobile (31) ou un dispositif d'enlèvement qui possède une bande transporteuse orientée verticalement et circulant horizontalement.

8. Système selon la revendication 7, **caractérisé en ce que** le dispositif d'enlèvement (14) ou le dispositif de poussée (31) sont disposés au-dessus du transporteur (6) de telle sorte que les articles (A) posés sur le support (7) sont enlevés de la tablette (T) lorsque le cadre (18) est abaissé.

9. Système selon l'une des revendications précédentes, **caractérisé en ce que** le dispositif d'abaissement (3) possède une première unité d'engagement (19) qui est conformée pour abaisser de manière active le cadre (18) de la tablette (T).

10. Système selon la revendication 9, **caractérisé en ce que** le dispositif d'abaissement (3) comporte une second unité d'engagement (22) qui est conformée pour soulever de nouveau de manière active le cadre (18) abaissé de la tablette (T).

11. Système selon l'une des revendications précédentes 1 à 8, **caractérisé en ce que** le dispositif d'abaissement (103) comporte une première unité d'engagement (27) qui comporte des guides (28) s'engageant avec le cadre et poussant celui-ci vers le bas.

12. Système selon l'une des revendications précédentes, **caractérisé en ce que** la plaque de transport (7) et le cadre (18) sont guidés et reliés l'un à l'autre en étant mobile verticalement.

13. Procécé pour vider des tablettes (T) chargées d'articles (A), ledit système comportant un premier transporteur d'acheminement (2) sur lequel des tablettes à vider (T) sont acheminés dans la direction de transport (F), lesquelles tablettes comportent un cadre (18) doté d'un bord élevé périphérique (9) et d'un fond (8) possédant au moins un évidement (10) et une plaque de transport plate (7) posée sur le fond (8) du cadre (18) et destinée aux articles (A), **caractérisé en ce que** seul le cadre (18) de tablette (T) dans une direction d'abaissement (3, 103), la plaque de transport (7) restant toujours à niveau constant.

14. Procédé selon la revendication 13, **caractérisé en ce que**, pour maintenir son niveau, la plaque de transport (7) est supportée dans la région du dispositif d'abaissement (3, 103), depuis le bas à travers l'évidement (10), par des éléments de support (15) mobiles dans la direction de transport.
